# EUROPÄISCHE PATENTSCHRIFT

(11) **EP 1 997 582 B1**
(45) Veröffentlichungstag und Bekanntmachung des Hinweises auf die Patenterteilung: **07.04.2010**
(21) Anmeldenummer: 08160417.5
(22) Anmeldetag: 28.10.2004
(51) Int. Cl.: B23Q 1/03, B25B 11/00

(54) **Verfahren zum Eichen eines Aufspanntisches**
Method for calibrating a tooling fixture
Procédé de calibration d'une table de support de pièce

(30) Priorität: 30.10.2003 DE 10350572
(43) Veröffentlichungstag der Anmeldung: 03.12.2008
(62) Teilanmeldung aus: 04790992.4
(73) Patentinhaber: Wilhelm Altendorf GmbH & Co. KG, 32429 Minden (DE)
(72) Erfinder: Zarske, Wolfgang, 96465 Neustadt (DE)
(74) Vertreter: Eisenführ, Speiser & Partner

(56) Entgegenhaltungen:
- DE-U1- 20 107 746
- US-B1- 6 250 619

## Beschreibung

Die Erfindung betrifft ein Verfahren zum Eichen eines Aufspanntisches für Werkstücke in einer Werkzeugmaschine, mit einer Vielzahl nebeneinander angeordneter Spannelemente, die jeweils eine Teleskoprohreinheit mit einem oberseitigen Saugteller aufweisen, wobei die konzentrischen Rohre der Teleskoprohreinheit durch einen Positionierungsantrieb relativ zueinander verschiebbar sind.

Aus dem DE-GM 201 07 746 ist ein derartiger sogenannter Matrixtisch bekannt, der insbesondere der Formatierung von Platten aus Holzwerkstoffen dient. Häufig ist ein solcher Aufspanntisch Teil eines Bearbeitungszentrums und wird von einem in Längsrichtung (x-Richtung) des Tisches verfahrbaren Ausleger überspannt, an dem ein quer (y-Richtung) und senkrecht (z-Richtung) zum Tisch verfahrbarer Werkzeugkopf angeordnet ist und eine Antriebsspindel trägt, mit der verschiedene Bearbeitungsaggregate wie namentlich Fräser und Bohrer, aber auch kleine Kreissägeblätter koppelbar sind.

Bei dem aus dem DE-GM 201 07 746 bekannten Spannelement ist als Positionierungsantrieb ein Schrittmotor am oberen Ende des stationären Teleskoprohres und damit konzentrisch zu diesem sowie dem verschiebbaren Teleskoprohr mit einem daran zentrisch befestigten, den Schrittmotor durchsetzenden Spindeltrieb angeordnet. Die elektrischen Zuleitungen zum Schrittmotor laufen durch das stationäre Teleskoprohr parallel zum Spindeltrieb, während das verschiebbare Teleskoprohr das stationäre außenseitig übergreift. Weil mit dieser Bauweise nur ein relativ großer Durchmesser der Spannelemente verwirklicht werden kann, ergibt sich eine entsprechend grobstufige Einteilung der Tischmatrix. Auch sind Wartungs- und Reparaturarbeiten behindert.

Diesen Nachteilen des Standes der Technik begegnet die Erfindung durch ein Verfahren zur Eichung einer Werkzeugmaschine mit einem Aufspanntisch und einem Werkzeugkopf, der unter NC-Steuerung über alle Spannelemente des Aufspanntisches in einer definierten Ebene verfahrbar ist, wobei jedes Spannelement gegen den Werkzeugkopf bzw. einen darin aufgenommenen Messdorn gefahren und jeweils die Zahl der dafür erforderlichen Schritte eines Schrittmotors für die Bildung einer zur definierten Ebene parallelen Werkstück-Auflageebene in die Steuerung eingespeist wird.

Nach einem hierzu ergänzenden Aspekt ist der Positionierungsantrieb koaxial zur Teleskoprohreinhelt angeordnet und mittels einer formschlüssigen Steckkupplung mit dem verschiebbaren Teleskoprohr lösbar gekoppelt ist. Auf diese Weise ist eine schlankere Ausbildung des Spannelements möglich, wobei es vorteilhaft ist, das verschiebbare Teleskoprohr im Innern des stationären äußeren Teleskoprohres zu führen. Zugleich kann das gesamte Spannelement - ohne den fest installierten und elektrisch oder anderweit angeschlossenen Antrieb - problemlos ausgewechselt werden, falls Probleme der mechanischen Führung oder Undichtigkeiten hinsichtlich der Saugluft auftreten sollten.

Nach einem weiteren Aspekt ist der Positionierungsantrieb ebenfalls koaxial an der Teleskoprohreinheit angeordnet, aber mit dem verschiebbaren Teleskoprohr bleibend gekoppelt sowie mittels einer lösbaren Steckverbindung an eine Stromversorgung elektrisch angeschlossen. In diesem Fall ist also der Positionierungsantrieb Teil des im Tisch lösbar gehaltenen Spannelements, so dass es zwar keiner mechanischen Kupplung zwischen dem Antrieb und dem verschiebbaren Teleskoprohr bedarf, wohl aber einer elektrischen Steckverbindung zwischen dem Tisch und jedem Spannelement. Diese Steckverbindung kann zugleich eine mechanische Zentrierung bilden.

Im einen wie im anderen Fall ist der Positionierungsantrieb vorzugsweise - wie an sich bekannt - ein Schrittmotor und wirkt mit einem zentrischen Spindeltrieb in der Teleskoprohreinheit zusammen. Dadurch lassen sich verschiedene Ausfahrhöhen des verschiebbaren Teleskoprohres (und damit des Saugtellers) sehr feinstufig bewirken und auf diese Weise mehrere unterschiedliche Höhenlagen des aufgespannten Werkstücks reproduzierbar und hinsichtlich der beteiligten Spannelemente einheitlich erzielen.

Besonders vorteilhaft ist es, die Teleskopeinheiten und die Positionierungsantriebe in tischüberspannenden Traversen anzuordnen, wobei mit dem befestigenden Einstecken der Spannelemente in die zugehörigen Traversen zugleich die mechanische bzw. elektrische Ankopplung an den motorischen Antrieb bzw. dessen Stromversorgung hergestellt ist. Auch der Anschluss an die Luftführung lässt sich auf diese Weise einfach und elegant verwirklichen.

Insoweit sieht eine Weiterbildung des Spannelementes vor, dass ein Saugluftpfad von einer Zugangsbohrung im äußeren Teleskoprohr durch den Ringraum zwischen den Rohren zu einer Einlassbohrung im inneren Teleskoprohr geführt ist, dessen Innenraum mit dem Saugteller in Verbindung steht, wobei mit axialem Versatz zur Kupplung hin in der Innenwandung des äußeren Teleskoprohres eine Dichtung gegenüber dem inneren Teleskoprohr angeordnet ist, die nur im vollständig eingefahrenen Zustand des inneren Teleskoprohres und einem anschließenden kurzen Ausfahrbereich sich zwischen der Einlassbohrung und der Zulassbohrung befindet. Mit solchen Spannelementen lässt sich der erfindungsgemäße Aufspanntisch derart betreiben, dass das aufzuspannende Werkstück unter Seitenausrichtung auf ortsfeste Stützen gelegt wird, welche eine Werkstück-Zuführebene definieren und die vollständig eingefahrenen Spannelemente überragen, hierauf die programmiert ausgewählten Spannelemente gegen das Werkstück ausgefahren werden und dieses bis über den kurzen Ausfahrbereich hinaus anheben, so dass durch den Saugluftpfad Unterdruck an die die unterbrochene Werkstück-Auflagefläche bildenden Saugteller gelangt und das Werkstück festgespannt wird, und dass schließlich diese aktivierten Spannelemente weiter in eine Arbeitsstellung - von mehreren möglichen Arbeitsstellungen - ausgefahren werden.

Eine andere Weiterbildung des Spannelements, die nicht notwendigerweise auf dessen vorstehend beschriebene Ausbildung beschränkt ist, sieht vor, dass im stationären (äußeren) Teleskoprohr der Teleskoprohreinheit nahe ihrem kupplungsfernen Ende eine Ringmanschette befestigt ist, wobei der Raum zwischen dieser und der Innenwandung des stationären Teleskoprohres mit Druckluft beaufschlagbar ist, um durch Anpressen der Manschette an das bewegliche (innere) Teleskoprohr dieses klemmend zu arretieren. Insbesondere besteht die dünnwandige Manschette einstückig mit beabstandeten Befestigungs- und Dichtungsringen aus Kunststoff. Auf diese Weise können die beweglichen Teleskoprohre der beteiligten Spannelemente, wenn sie eine ausgefahrene Arbeitsstellung erreicht haben, in dieser Stellung versteift werden, so dass bei der anschließenden Bearbeitung des aufgespannten Werkstücks die Spannelemente von den dabei auftretenden Kräften nicht in Schwingungen versetzt werden, was die Genauigkeit der Bearbeitung beeinträchtigen würde.

Dabei ist es weiterhin vorteilhaft, wenn die Teleskopeinheiten jeweils mit ihrem Saugteller und ihrem Kupplungs- bzw. elektrischen Verbindungspartner in den tischüberspannenden Traversen durch Einstecken des äußeren Teleskoprohres befestigt sind und in der Befestigungsstellung die Steckkupplung bzw. Verbindung geschlossen ist.

Dabei ist es weiterhin vorteilhaft, wenn die Positionierungsantriebe jeweils nebst Kupplungspartner bzw. elektrischem Verbindungspartner ebenfalls in Traversen angeordnet sind, die parallel zu den Traversen der Teleskopeinheiten verlaufen.

Dabei ist es weiterhin vorteilhaft, wenn die Traversen der Teleskopeinheiten aus Hohlprofilen mit mehreren parallelen Wandungen bestehen, die Luftführungskanäle bilden und von Stufenbohrungen zur Aufnahme der Teleskopeinheiten durchsetzt sind, wobei an diesen angeordnete Ringdichtungen axial versetzte Abschnitte des äußeren Teleskoprohres, in denen radiale Zugangsbohrungen vorgesehen sind, gegen die Wandungen abdichten.

Dabei ist es weiterhin vorteilhaft, wenn die Steckkupplung aus mindestens einer zentrischen Quernut im einen Kupplungspartner und einer in diese eingreifenden Klinge am anderen Kupplungspartner besteht, wobei die Klinge an einer Muffe sitzt, die in einem Basisteil des anderen Kupplungspartners senkrecht zur Klinge verschieblich geführt ist.

Dabei ist es weiterhin vorteilhaft, wenn im einen Kupplungspartner zwei Quernuten senkrecht zueinander angeordnet sind.

Dabei ist es weiterhin vorteilhaft, wenn die Ränder der Quernut(en) mit Einweisungsschrägen versehen sind.

Das Spannelement für einen Aufspanntisch nach der vorherigen Beschreibung kann vorteilhafterweise einen Saugluftpfad aufweisen, der von einer Zugangsbohrung im äußeren Teleskoprohr durch den Ringraum zwischen den Rohren zu einer Einlassbohrung im inneren Teleskoprohr geführt ist, dessen Innenraum mit dem Saugteller in Verbindung steht, wobei mit axialem Versatz zur Kupplung hin in der Innenwandung des äußeren Teleskoprohres eine Dichtung gegenüber dem inneren Teleskoprohr angeordnet ist, die nur im vollständig eingefahren Zustand des inneren Teleskoprohres und einem anschließenden kurzen Ausfahrbereich sich zwischen der Zugangsbohrung und der Einlassbohrung befindet.

Dabei ist es weiterhin vorteilhaft, wenn eine von den Oberflächen von Stützen definierte Werkstück-Zuführebene, die im vollständig eingefahrenen Zustand des inneren Teleskoprohres oberhalb der Saugteller-Oberseiten, aber innerhalb des kurzen Ausfahrbereichs des inneren Teleskoprohres liegt.

Dabei ist es weiterhin vorteilhaft, wenn die Stützen-Oberflächen von allseitig drehbaren Kugeln gebildet sind.

Dabei ist es weiterhin vorteilhaft, wenn im stationären (äußeren) Teleskoprohr der Teleskoprohreinheit nahe ihrem kupplungsfernen Ende eine Ringmanschette befestigt ist, wobei der Raum zwischen dieser und der Innenwandung des stationären Teleskoprohres mit Druckluft beaufschlagbar ist, um durch Anpressen der Manschette an das bewegliche (innere) Teleskoprohr dieses klemmend zu arretieren.

Dabei ist es weiterhin vorteilhaft, wenn die dünnwandige Manschette einstückig mit beabstandeten Befestigungs- und Dichtungsringen aus Kunststoff besteht.

Der zuvor erläuterte erfindungsgemäße Aufspanntisch kann nach einem Verfahren betrieben werden, bei dem das aufzuspannende Werkstück unter Seitenausrichtung auf die Stützen gelegt wird, hierauf die programmiert ausgewählten Spannelemente gegen das Werkstück ausgefahren werden und dieses bis über den kurzen Ausfahrbereich hinaus anheben, so dass durch den Saugluftpfad Unterdruck an die die unterbrochene Werkstück-Auflagefläche bildenden Saugteller gelangt und das Werkstück festgespannt wird, und dass schließlich diese aktivierten Spannelemente weiter in eine Arbeitsstellung ausgefahren werden.
Näheres veranschaulichen die zeichnerischen Darstellungen von Ausführungsbeispielen und deren nachfolgende Beschreibung. In den Zeichnungen zeigt:
- Figur 1: eine Draufsicht auf den erfindungsgemäßen Aufspanntisch;
- Figur 2: einen Vertikaltisch durch zwei in x-Richtung benachbarte, zum gleichen Traversensatz gehörende Spannelemente in ihrer Ruhestellung;
- Figur 3: den Kreisausschnitt III in Figur 2 in vergrößertem Maßstab;
- Figur 4: den Kreisausschnitt IV in Figur 2 in vergrößertem Maßstab;
- Figur 5: den Kreisausschnitt V in Figur 2 in vergrößertem Maßstab;
- Figur 6: einen der Figur 2 ähnlichen Vertikalschnitt durch zwei in Querrichtung (y-Richtung) des Aufspanntisches benachbarte Spannelement einer anderen Ausführungsform;
- Figur 7: einen schematischen Längsschnitt durch den Aufspanntisch in Figur 7 mit der Darstellung eines zugehörigen, den Bearbeitungskopf nebst Bearbaitungsaggregat tragenden Auslegers in zwei verschiedenen Bearbeitungssituationen und verschiedenen Arbeitsstellungen ausgewählter Spannelemente;
- Figur 8: den Kreisausschnitt VIII in Figur 7 in vergrößertem Maßstab;
- Figur 9: den Kreisausschnitt IX in Figur 7 in vergrößertem Maßstab;
- Figur 10: in perspektivischer Darstellung einen Schrittmotor nebst Kupplungspartner für ein Spannelement gemäß Figur 2;
- Figur 11: eine Seitenansicht des Schrittmotors nebst Kupplungspartner in Figur 10 in vergrößertem Maßstab; und
- Figur 12: eine Draufsicht auf den Schrittmotor nebst Kupplungspartner in den Figuren 10 und 11.

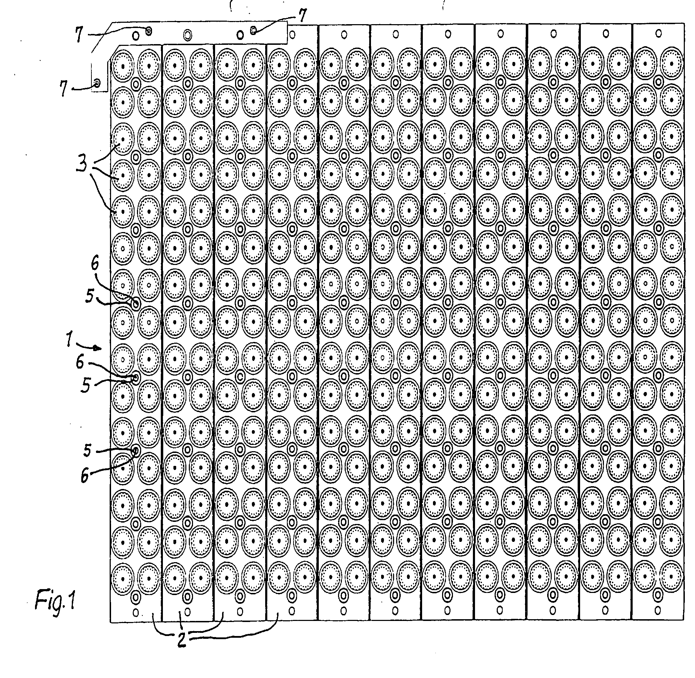

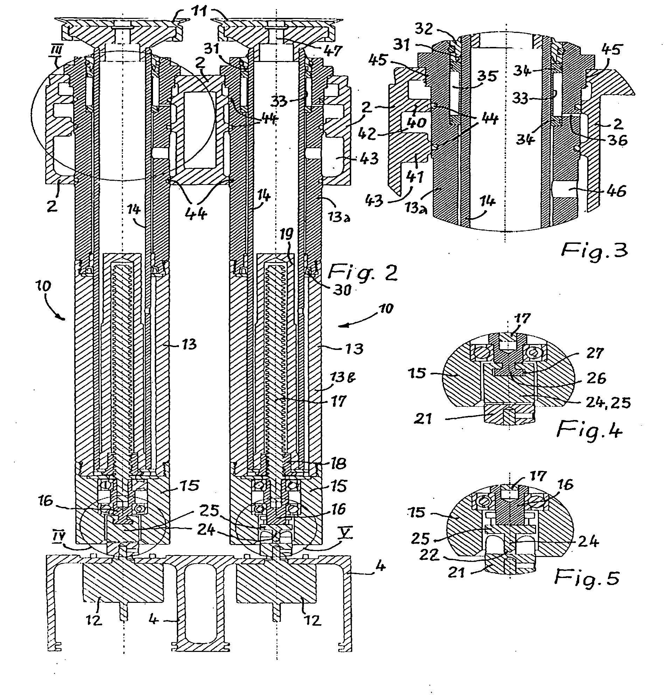

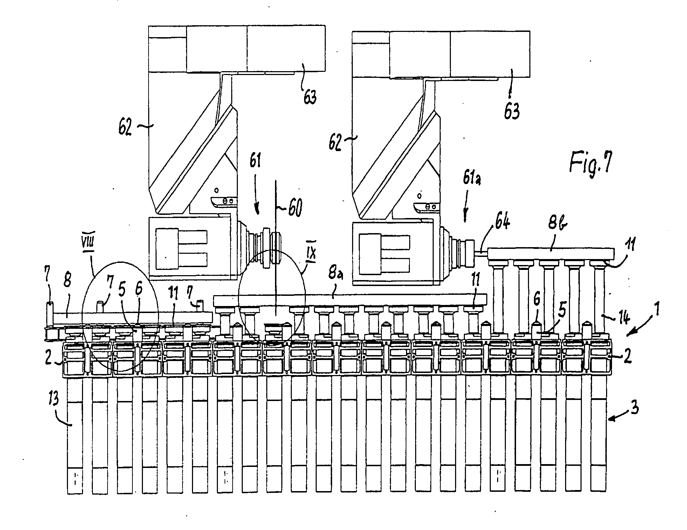

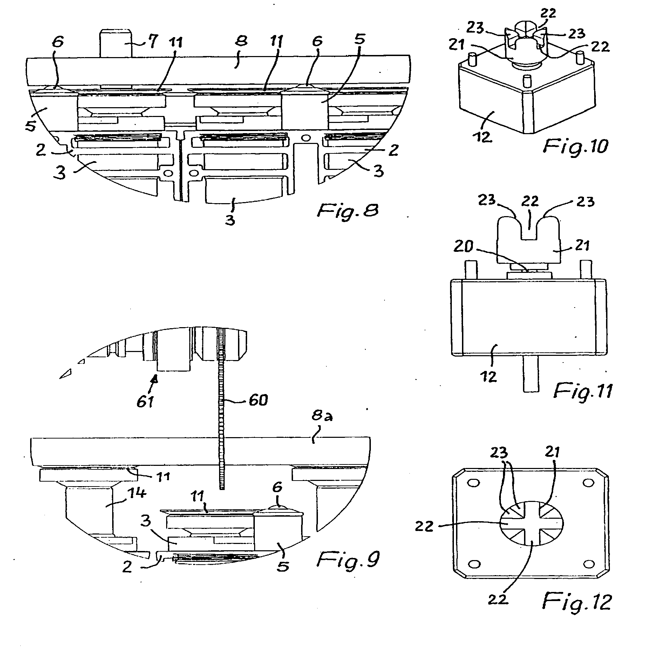

Der in seiner wesentlichen Gesamtheit den Figuren 1 und 7 entnehmbare Aufspanntisch 1 besteht aus einer Mehrzahl von querverlaufenden (y-Richtung) Traversen 2, deren jede eine Vielzahl von Paaren nebeneinander hin durch gesteckter Spannelemente 3 hält (Figuren 2 und 7). An ihrem unteren Ende sind die Spannelemente 3 an weiteren Traversen 4 gelagert, die parallel zu den Traversen 2 verlaufen, und an denen die Spannelemente 3 in einer Weise gehälten sind, auf die noch einzugehen sein wird (dies ist in der schematischen Darstellung der Figur 7 weggelassen worden). Die Traversen 2, 4 sind an einem - in den Zeichnungen nicht dargestellten - Bett oder Rahmen befestigt.
Jeweils zwischen vier im Quadrat benachbarten Spannelementen 3 sind Stützen 5 vorgesehen (Figuren 1 und 7), die jeweils oberseitig eine allseits drehbare Auflagerkugel 6 tragen. Auf die Kugeln 6 wird in der Ruhe- oder Ausgangsstellung der ,Spannelemente 3 ein zu bearbeitendes Werkstück gelegt und in der Oberflächenebene des Aufspanntisches 1 verschoben, ehe der Aufspannvorgang beginnt (Figur 8). Anschläge 7 dienen der (rechtwinkligen) Ausrichtung eines plattenförmigen Werkstücks 8 auf dem Aufspanntisch 1 (Figur 7, 8).
Jedes Spannelement 3 des in den Figuren 2 bis 5 dargestellten Ausführungsbeispiels besteht im Wesentlichen aus einer Teleskoprohreinheit 10, einem Saugteller 11 und einem Positionierungsantrieb 12 in Form eines Schrittmotors (Figur 2). Jede Teleskoprohreinheit 10 besteht aus einem äußeren, stationären Teleskoprohr 13 und einem inneren, vertikal beweglichen Teleskoprohr 14. Am Basisteil 15 des Spannelements 3 ist das äußere Teleskoprohr 13 befestigt und in seinem Inneren ist eine Welle 16 gelagert, die sich in einer Spindel 17 fortsetzt. Eine auf der Spindel 17 geführte Spindelmutter 18 Ist am Inneren Teleskoprohr 14 befestigt, so dass eine Drehung der Spindel 17 mit der Welle 16 zu einer linearen (Aufwärts)Bewegung des inneren Teleskoprohres 14 führt; ein oben geschlossenes Schutzrohr 19 dient der Sauberhaltung des Spindeltriebs 17, 18.
Der Schrittmotor 12 ist in der Traverse 4 in der der Figur 2 entnehmbaren Weise befestigt. Auf der Abtriebswelle 20 des Schrittmotors 12 ist ein Kupplungspartner 21 einer mechanischen, formschlüssigen Steckkupplung befestigt, der zwei senkrecht zueinander verlaufende Quernuten 22 aufweist; siehe auch die vergrößerten Darstellungen in den Figuren 4, 5, welche die Kupplung in zueinander um 90° verdrehten Schnitten darstellen. Die Ränder der Quernuten 22 sind durch Abrundung mit Einweisungsschrägen 23 versehen. In eine der Quernuten 22 greift - im zusammengebauten Zustand (Figur 2) - eine Klinge 24 des anderen Kupplungspartners 25 ein, welcher an der Welle 16 formschlüssig befestigt ist. Um Zwängungen aufgrund einer Exzentrizität zwischen der Abtriebswelle 20 des Schrittmotors 12 (und damit dem Kupplungspartner 21) gegenüber der Welle 16 des Spindeltriebs 17, 18 auszuschalten, hat die Welle 16 einen umgekehrt T-förmigen Ansatz, dessen Quersteg 26 in eine entsprechend C-förmigen, senkrecht zur Längserstreckung der Klinge 24 verlaufenden Nut 27 des Kupplungspartners 25 geführt ist (Figur 4, 5) und so seitliche Ausgleichsbewegungen senkrecht zur Quererstreckung der Klinge 24 ausführen kann. Die elektrischen Anschlüsse der Schrittmotoren 12 sind in Figur 2 nicht dargestellt.
Der obere Abschnitt 13a des äußeren (stationären) Teleskoprohres 13 ist mit dem unteren Abschnitt 13b verschraubt und trägt eine Dichtung 30 gegenüber dem inneren (beweglichen) Teleskoprohr 14. Eine weitere Dichtung 31 zwischen den beiden Teleskoprohren 13, 14 ist am oberen Ende des Teleskoprohrabschnittes 13a vorgesehen. Die Halterung der Dichtung 31 ist als Ring 32 ausgebildet, der Im Teleskoprohrabschnitt 13a eine Ringmanschette 33 hält, welche dünnwandig mit beabstandeten Befestigungs- und Dichtungsringen 34 aus Kunststoff besteht. Die Ringe 34 bilden zwischen sich, der Ringmanschette 33 und dem Teleskoprohrabschnitt 13a einen Ringraum 35 aus, welcher über eine Zugangsbohrung 36 im Teleskoprohrabschnitt 13a mit Druckluft versorgt werden kann, um die Ringmanschette gegen das innere Teleskoprohr 14 zu pressen und auf diese Weise zu arretieren, wenn es ausgefahren ist.
Die Traversen 2 bilden mit Hilfe paralleler Zwischenwandungen 40 und 41 Luftführungskanäle 42, 43. Zu diesem Zweck sind für die Aufnahme der Spannelemente 3 im Durchmesser gestufte Bohrungen in den Außenwänden der Traversen 2 und den Wandungen 40, 41 vorgesehen, die jeweils mit O-Ring-Dichtungen 44 gegen den im Außendurchmesser entsprechend gestuften Teleskoprohrabschnitt 13a des stationären Teleskoprohres 13 abdichten. Die Befestigung des Teleskoprohrabschnitts 13a und damit des gesamten Spannelements 3 erfolgt durch Einschrauben eines im Durchmesser vergrößerten Abschnitts des Teleskoprohrabschnitts 13a in die obere Außenwandung der Traverse 2 bei 45 (Figur 3). Durch den Luftführungskanal 42 wird Druckluft über die Zugangsbohrung 36 in den Ringraum 35 geleitet, wenn nach dem Ausfahren des inneren Teleskoprohres 14 dieser gegenüber dem äußeren Teleskoprohr 13 arretiert werden soll. An den Luftführungskanal 43 wird Unterdruck gelegt, der durch die Einlassbohrung 48 am Zwischenraum zwischen dem inneren Teleskoprohr 14 und dem äußeren Teleskoprohrabschnitt liegt. Solange sich das innere Teleskoprohr 14 in seiner in Figur 2 dargestellten Ruhestellung befindet, kann der - ständig anliegende - Unterdruck nicht in den Innenraum des inneren Teleskoprohres 14 gelangen und im Saugteller 11 durch die zentrische Bohrung 47 wirksam werden. Wird das innere Teleskoprohr 14 jedoch (nach oben) ausgefahren, gelangt die Einlassbohrung 48 im inneren Teleskoprohr 14 an der Dichtung 30 vorbei und steht dann mit dem Raum zwischen dem inneren Teleskoprohr 14 und dem Rohrabschnitt 13a des äußeren Teleskoprohres 13 in Verbindung, so dass der Unterdruck am Saugteller 11 anliegt.

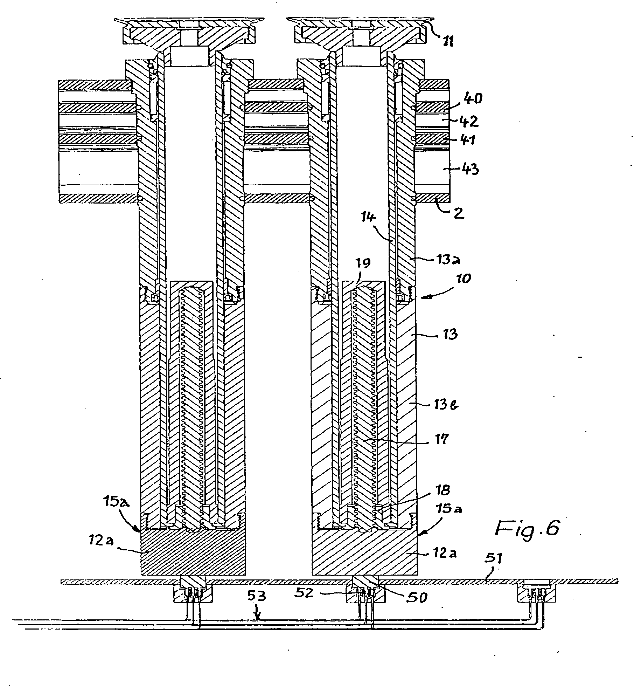

Figur 6 veranschaulicht ein anderes Ausführungsbeispiel des Spannelements 3. Bei diesem enthält das Basisteil 15a den Positionierungstrieb in Form eines Schrittmotors 12a als integralen Bestandteil. Er ist unmittelbar mit der Spindel 17 verbunden, die im Übrigen in gleicher Weise wirkt wie im Falle des ersten Ausführungsbeispieles. Ein koaxialer Zapfen 50 am Schrittmotor 12a stellt sowohl die mechanische Zentrierung des Spannelements in einer Bodenplatte 51 (die an die Stelle der Traverse 4 des ersten Ausführungsbeispieles tritt) her und zugleich den elektrischen Anschluss 52 mit der Zuleitung 53. Im Übrigen entspricht die Ausbildung der des Spannelements derjenigen des ersten Ausführungsbeisplels.
Im Folgenden soll anhand der Figuren 7 bis 9 der Betrieb des erfindungsgemäßen Aufspanntisches erläutert werden. Wenn ein plattenförmiges Werkstück auf den Aufspanntisch aufgelegt wird, befinden sich sämtliche Spannelemente mit ihren Saugtellern 11 im vollständig eingefahrenen (abgesenkten) Zustand, wie er am besten Figur 8 zu entnehmen ist. Das Werkstück 8 liegt auf den Kugeln 11 der Stützen 5 auf und kann auf diese Weise ausgerichtet, insbesondere gegen die Anschläge 7 geschoben werden. Dann werden diejenigen Spanneinheiten 3 aktiviert, welche nicht durch ihr Ausfahren die spätere Bearbeitung des Werkstücks behindern würden. Sie werden im Allgemeinen programmgesteuert ausgewählt; dies geschieht durch Ansteuern der zugehörigen Schrittmotore 12. Die inneren Teleskoprohre 14 der betreffenden Spannelemente 3 werden dadurch mit Hilfe des Spindeltriebs 17, 18 ausgefahren und heben das Werkstück 8 gleichmäßig von den Stützen 5 ab. Sobald dabei die Einlassbohrung 48 die Dichtung 30 passiert, wird Unterdruck an die Spannteller 11 gelegt, so dass diese das Werkstück festspannen. In diesem nur zum Teil ausgefahrenen Zustand der inneren Teleskoprohre 14 kann beispielsweise das aufgespannte Werkstück 8a mit Hilfe eines ein Kreissägeblatt 60 aufweisenden Bearbeitungsaggregats zersägt (formatiert) werden, wie dies im Mittelteil der Figur 7 dargestellt ist. Das Bearbeitungsaggregat 61 ist an einem - im Beispiel 5-achsigen - Werkzeugkopf 62 gehalten, der seinerseits mit Hilfe eines Auslegers 63 in Längsrichtung (x-Richtung) des Aufspanntisches 1 verfahrbar ist; Einzelheiten hiervon sind weggelassen.
Rechts neben der soeben erläuterten Anordnung ist in Figur 7 das seitliche Bohren eines Werkstücks 8b mit Hilfe desselben Werkzeugkopfes 62, aber einem anderen Bearbeitungsaggregat 61a mit einem Bohrer 64 gezeigt. Zu diesem Zweck sind die Teleskoprohre 14 der beteiligten Spannelemente 3 vollständig ausgefahren.
Die nahezu stufenlose Ausrichtung der Saugteller 11 aller Spannelemente 3 des Aufspanntisches gegenüber der Ebene, die vom in x- und y-Richtung verfahrbaren Werkzeugkopf einer mit dem Aufspanntisch ausgerüsteten Werkzeugmaschine bestimmt wird, erlaubt eine Art "Eichung" dahingehend, dass gegenüber dem Werkzeugkopf 62 oder einem in seine Werkzeugaufnahme eingespannten Messdorn (unter 180°-Drehung des Werkzeugkopfes gegenüber seinen in Figur 7 dargestellten Stellungen) eine Nullstellung jedes Spannelements festgestellt wird, etwa dadurch, dass die dafür erforderlichen Schrittzahlen ermittelt und in die Steuerung eingespeist werden.

## Patentansprüche

1. Verfahren zur Eichung einer Werkzeugmaschine mit einem Aufspanntisch (1) und einem Werkzeugkopf (62), der unter NC-Steuerung über alle Spannelemente (3) des Aufspanntisches in einer definierten Ebene verfahrbar ist,
**dadurch gekennzeichnet, dass** jedes Spannelement (3) gegen den Werkzeugkopf (62) bzw. einen darin aufgenommenen Messdorn gefahren und jeweils die Zahl der dafür erforderlichen Schritte eines Schrittmotors (12) für die Bildung einer zur definierten Ebene parallelen Werkstück-Auflageebene in die Steuerung eingespeist wird.

2. Verfahren nach Anspruch 1,
**dadurch gekennzeichnet, dass** der Aufspanntisch (1) für Werkstücke (8) in einer Werkzeugmaschine ausgebildet ist, und eine Vielzahl nebeneinander angeordneter Spannelemente (3), die jeweils eine Teleskoprohreinheit (10) mit einem oberseitigen Saugteller (11) aufweisen, wobei die konzentrischen Rohre (13, 14) der Teleskoprohreinheit (10) durch einen Positionierungsantrieb (12) relativ zueinander verschiebbar sind, aufweist.

3. Verfahren nach Anspruch 2,
**dadurch gekennzeichnet, dass** der Positionierungsantrieb (12) koaxial zur Teleskoprohreinheit (10) angeordnet und mittels einer formschlüssigen Steckkupplung (21, 25) mit dem verschiebbaren Teleskoprohr (13) lösbar gekoppelt ist.

4. Verfahren nach Anspruch 2,
**dadurch gekennzeichnet, dass** der Positionierungsantrieb (12) koaxial an der Teleskoprohreinheit (10) angeordnet und mit dem verschiebbaren Teleskoprohr (13) bleibend gekoppelt sowie mittels einer lösbaren Steckverbindung (50, 52) an eine Stromversorgung (53) elektrisch angeschlossen ist.

5. Verfahren nach Anspruch 4,
**dadurch gekennzeichnet, dass** die Steckverbindung (50, 52) auch eine mechanische Zentrierung bildet.

6. Verfahren nach einem der vorhergehenden Ansprüche,
**dadurch gekennzeichnet, dass** der Positionierungsantrieb (12) ein Schrittmotor ist, der mit einem zentrischen Spindeltrieb (17, 18) in der Teleskopeinheit (10) zusammenwirkt.

7. Verfahren zur Eichung einer Werkzeugmaschine mit einem Aufspanntisch (1) mit einer Vielzahl nebeneinander angeordneter Spannelemente (3), die jeweils eine Teleskoprohreinheit (10) mit einem oberseitigen Saugteller (11) aufweisen, wobei die konzentrischen Rohre (13, 14) der Teleskoprohreinheit (10) durch einen Schrittmotor (12) relativ zueinander verschiebbar sind, der mit einem zentrischen Spindeltrieb (17, 18) in der Teleskoprohreinheit (10) zusammenwirkt und mit einem Werkzeugkopf (62), der unter NC-Steuerung über alle Spannelemente (3) des Aufspanntisches in einer definierten Ebene verfahrbar ist,
**dadurch gekennzeichnet, dass** jedes Spannelement (3) gegen den Werkzeugkopf (62) bzw. einen darin aufgenommenen Messdorn gefahren und jeweils die Zahl der dafür erforderlichen Schritte eines Schrittmotors (12) für die Bildung einer zur definierten Ebene parallelen Werkstück-Auflageebene in die Steuerung eingespeist wird.

## Claims

1. A method of calibrating a machine tool with a clamping table (1) and a tool head (62) which is displaceable in a defined plane under numerical control by way of all the clamping elements (3) of the clamping table, **characterized in that** each clamping element (3) is moved towards the tool head (62) or a plug gauge received therein, and the number of the steps of a stepper motor (12) - which are required therefor - for forming a workpiece-support plane parallel to the defined plane are fed in each case into the controlled.

2. A method according to Claim 1, **characterized in that** the clamping table (1) for workpieces (8) is formed in a machine tool and has a plurality of clamping elements (3) which are arranged adjacent to one another and which are provided in each case with a telescopic tube unit (10) with a suction plate (11) on the top, wherein the concentric tubes (13, 14) of the telescopic tube unit (10) are displaceable relative to each other by a positioning drive (12).

3. A method according to Claim 2, **characterized in that** the positioning drive (12) is arranged coaxially with the telescopic tube unit (10) and is coupled in a releasable manner to the displaceable telescopic tube (13) by means of a positively locking plug-in coupling (21, 25).

4. A method according to Claim 2, **characterized in that** the positioning drive (12) is arranged coaxially on the telescopic tube unit (10) and is permanently coupled to the displaceable telescopic tube (13) and electrically connected to a power supply unit (53) by means of a releasable plug-in connexion (50, 52).

5. A method according to Claim 4, **characterized in that** the plug-in connexion (50, 52) also forms a mechanical centring.

6. A method according to any one of the preceding Claims, **characterized in that** the positioning drive (12) is a stepper motor which co-operates with a central spindle drive (17, 18) in the telescopic unit (10).

7. A method of calibrating a machine tool with a clamping table (1) with a plurality of clamping elements (3) which are arranged adjacent to one another and which are provided in each case with a telescopic tube unit (10) with a suction plate (11) on the top, wherein the concentric tubes (13, 14) of the telescopic tube unit (10) are displaceable relative to each other by a stepper motor (12) which co-operates with a central spindle drive (17, 18) in the telescopic tube unit (10), and with a tool head (62) which is displaceable in a defined plane under numerical control by way of all the clamping elements (3) of the clamping table, **characterized in that** each clamping elements (3) is moved towards the tool head (62) or a plug gauge received therein, and the number of the steps of a stepper motor (12) - which are required therefor - for forming a workpiece-support plane parallel to the defined plane are fed into the controller.

## Revendications

1. Procédé pour l'étalonnage d'une machine-outil comprenant une table de support (1) et une tête à outils (62) déplaçable sous une commande numérique dans un plan défini au-dessus de tous les éléments de serrage (3) de la table de support,
**caractérisé en ce que** chaque élément de serrage (3) est déplacé pour venir contre la tête à outils (62) ou respectivement contre un doigt de mesure reçu dans celle-ci, et à chaque fois le nombre des pas nécessaires à cet effet d'un moteur pas à pas (12) est injecté dans la commande pour la formation d'un plan d'appui pour la pièce à oeuvrer, parallèle au plan défini.

2. Procédé selon la revendication 1,
**caractérisé en ce que** la table de support (1) est réalisée pour des pièces à oeuvrer (8) dans une machine-outil, et comporte une pluralité d'éléments de serrage (3) agencés les uns à côté des autres, qui comportent chacun une unité à tubes télescopiques (10) avec une coupelle de succion (11) sur le côté supérieur, les tubes concentriques (13, 14) de l'unité à tubes télescopiques (10) étant déplaçables l'un par rapport à l'autre par un entraînement de positionnement (12).

3. Procédé selon la revendication 2,
**caractérisé en ce que** l'entraînement de positionnement (12) est agencé coaxialement à l'unité à tubes télescopiques (10) et est couplé de façon détachable avec le tube télescopique déplaçable (13), au moyen d'un accouplement à enfichage (21, 25) à coopération de formes.

4. Procédé selon la revendication 2,
**caractérisé en ce que** l'entraînement de positionnement (12) est agencé coaxialement sur l'unité à tubes télescopiques (10) et est accouplé à demeure avec le tube télescopique (13) déplaçable, et est raccordé sur le plan électrique à une alimentation électrique (53) au moyen d'une liaison à enfichage (50, 52) détachable.

5. Procédé selon la revendication 4,
**caractérisé en ce que** la liaison à enfichage (50, 52) forme aussi un centrage mécanique.

6. Procédé selon l'une des revendications précédentes,
**caractérisé en ce que** l'entzaînement de positionnement (12) est un moteur pas à pas qui coopère avec un mécanisme à broche central (17, 18) dans l'unité télescopique (10).

7. Procédé et pour étalonner une machine-outil comprenant une table de support (1) avec une pluralité d'éléments de serrage (3) agencés les uns à côté des autres, qui comprennent chacun une unité à tubes télescopiques (10) avec une coupelle de succion (11) du côté supérieur, dans lequel les tubes concentriques (13, 14) de l'unité à tubes télescopiques (10) sont déplaçables l'un par rapport à l'autre au moyen d'un moteur pas à pas (12) qui coopère avec un entraînement à broche central (17, 18) dans l'unité à tubes télescopiques (10), et comprenant une tête à outils (62) qui est déplaçable sous une commande numérique dans un plan défini au-dessus de tous les éléments de serrage (3) de la table de support,
**caractérisé en ce que** chaque élément de serrage (3) est déplacé pour venir contre la tête à outils (62) ou contre un doigt de mesure reçu dans celle-ci, et **en ce qu'**à chaque fois le nombre des pas nécessaires à cet effet d'un moteur pas à pas (12) est injecté dans la commande pour la formation d'un plan d'appui pour les pièces à oeuvrer, parallèle au plan défini.
